# EUROPEAN PATENT APPLICATION

(11) **EP 2 894 783 A1**
(43) Date of publication of application: **15.07.2015**
(21) Application number: 13860449.1
(22) Date of filing: 20.08.2013
(51) Int. Cl.: H02P 27/06, H02M 3/155, H02M 7/12, H02M 7/48

(54) **MOTOR DRIVE DEVICE, AIR CONDITIONER, AND CONVERTER CONTROL METHOD**

(30) Priority: 06.12.2012 JP 2012267233
(71) Applicant: Mitsubishi Heavy Industries, Ltd., Tokyo 108-8215 (JP)
(72) Inventor: IWAKI, Michizo, Tokyo 108-8215 (JP); SUMIYA, Atuyuki, Tokyo 108-8215 (JP); KANIE, Tetsuo, Tokyo 108-8215 (JP); ADACHI, Takehiro, Tokyo 108-8215 (JP)
(74) Representative: Intès, Didier Gérard André
(86) International application number: PCT/JP2013/072164
(87) International publication number: WO 2014/087706

(57) **Abstract**

A motor drive device provided with a booster circuit in a converter, wherein a converter control unit (15) is provided with a command setting unit (20) and a switching control unit (30). The command setting unit (20) has a first command determination unit (21) for determining a first DC voltage command Vi* corresponding to a power supply input current Ia, a second command determination unit (22) for determining a second DC voltage command Vω* corresponding to the speed ω at which a compressor motor rotates, and a selection unit (23) for selecting the first DC voltage command Vi* or the second DC voltage command Vω*, whichever is larger, and imparting the selected one as a DC voltage command Vdc* to the switching control unit (30).

## Description

### Technical Field

The present invention relates to a motor drive device, an air conditioner, and a method of controlling a converter.

### Background Art

A motor control device, which controls the speed of a motor by the combination of a power supply circuit suppressing harmonics of a power supply current and a motor drive circuit in a rectifier circuit that converts AC power into DC power by rectifying AC power, has been known in the related art. For example, PTL 1 discloses a technique that controls the speed of a motor by controlling a DC voltage and an inverter conduction ratio with a power factor improvement-converter circuit and an inverter circuit. The power factor improvement-converter circuit uses voltage-increasing means for suppressing harmonics of a power supply current and controlling a DC voltage at the same time, and the inverter circuit drives the motor.

### Citation List

### Patent Literature

[PTL 1] Japanese Patent No. 3424461

### Summary of Invention

### Technical Problem

Incidentally, when the DC voltage becomes high, the frequency of the switching of the voltage-increasing means is increased. For this reason, the amount of loss caused by switching is increased. Accordingly, in terms of the reduction of a switching loss, it is preferable that the DC voltage is set to a value as small as possible.

The invention has been made in consideration of these circumstances, and an object of the invention is to provide a motor drive device of which a DC voltage can be controlled to an appropriate value, an air conditioner, and a method of controlling a converter.

### Solution to Problem

A first aspect of the invention provides a motor drive device that drives a compressor motor mounted on an air conditioner. The motor drive device includes a converter that converts AC power input from an AC power supply into DC power and outputs the DC power, and an inverter that converts the DC power output from the converter into AC power and supplies the AC power to a compressor motor. The converter includes rectification means for converting the AC power input from an AC power supply into DC power, smoothing means that is connected in parallel with the rectification means on a DC-output side of the rectification means, at least one voltage-increasing means that is provided between the rectification means and the smoothing means and increases voltage by performing the opening and closing of switching elements, and converter control means. The converter control means includes command setting means for setting a DC voltage command, and switching control means for controlling the opening and closing of the switching elements, which are included in the voltage-increasing means, on the basis of the DC voltage command set by the command setting means. The command setting means includes: first command determination means for determining a first DC voltage command, which corresponds to a power supply input current, by using first information in which the power supply input current is associated with the first DC voltage command used to suppress harmonics included in the power supply input current within a predetermined regulation value; second command determination means for determining a second DC voltage command, which corresponds to a rotational speed of the compressor motor, by using second information in which the rotational speed of the compressor motor is associated with the second DC voltage command; and selection means for selecting a larger one of the first DC voltage command and the second DC voltage command and giving the larger one to the switching control means as the DC voltage command.

According to the motor drive device, the harmonics included in the power supply input current become equal to or smaller than a predetermined regulation value and the value of the minimum DC voltage, which allows the rotational speed required in the compressor motor to be achieved, can be set as the DC voltage command. Accordingly, since the frequency of the opening and closing of the switching elements of the voltage-increasing means can be suppressed to a minimum, a loss caused by switching can be reduced.

In the motor drive device, a property of the first DC voltage command relative to the power supply input current has a peak in, for example, an intermediate region of the power supply input current, and is a property in which the first DC voltage command is gradually decreased at the peak.

In the motor drive device, it is preferable that a property of the second DC voltage command relative to the rotational speed of the compressor motor is set to a value larger than a counter electromotive voltage property of the compressor motor and is set to show the same inclination as a counter electromotive voltage of the compressor motor.

Since the second information is set as described above, it is possible to output a rotational speed required in the compressor motor and to determine a second DC voltage command that is preferable in terms of the reduction of a switching loss.

In the motor drive device, it is preferable that an upper limit of the current-voltage command is set to be equal to or lower than a withstand voltage of an electronic component mounted on the motor drive device and a lower limit of the current-voltage command is set to be equal to or higher than a peak value of the power supply input current supplied from the AC power supply.

Since such an upper limit and such a lower limit are set, it is possible to set the current-voltage command in a range that is appropriate in terms of voltage resistance and a power supply input voltage.

A second aspect of the invention provides an air conditioner that includes any one of the motor drive devices.

A third aspect of the invention provides a method of controlling a converter applied to a motor drive device. The motor drive device includes a converter and an inverter. The converter includes rectification means for converting AC power input from an AC power supply into DC power, smoothing means that is connected in parallel with the rectification means on a DC-output side of the rectification means, and at least one voltage-increasing means that is provided between the rectification means and the smoothing means. The inverter converts the DC power output from the converter into AC power and supplies the AC power to a compressor motor. The method includes: a first command determination step of determining a first DC voltage command, which corresponds to a power supply input current, by using first information in which the power supply input current is associated with the first DC voltage command used to suppress harmonics included in the power supply input current within a predetermined regulation value; a second command determination step of determining a second DC voltage command, which corresponds to a rotational speed of the compressor motor, by using second information in which the rotational speed of the compressor motor is associated with the second DC voltage command; a selection step of selecting a larger one of the first DC voltage command and the second DC voltage command as a DC voltage command; and a switching control step of controlling the opening and closing of switching elements, which are included in the voltage-increasing means, on the basis of the selected DC voltage command.

### Advantageous Effects of Invention

According to the invention, it is possible to obtain an effect of suppressing a switching loss as much as possible and to improve efficiency.

### Brief Description of Drawings

Fig. 1 is a view showing the schematic configuration of a motor drive device according to an embodiment of the invention.
Fig. 2 is a functional block diagram of a converter control unit shown in Fig. 1.
Fig. 3 is a diagram showing an example of first information.
Fig. 4 is a diagram showing an example of second information.
Fig. 5 is a flowchart illustrating a procedure of processing that is performed by the converter control unit.
Fig. 6 is a diagram illustrating a DC voltage command that is selected by a selection unit.

### Description of Embodiments

A motor drive device according to an embodiment of the invention, an air conditioner, and a method of controlling a converter will be described below with reference to the drawings.

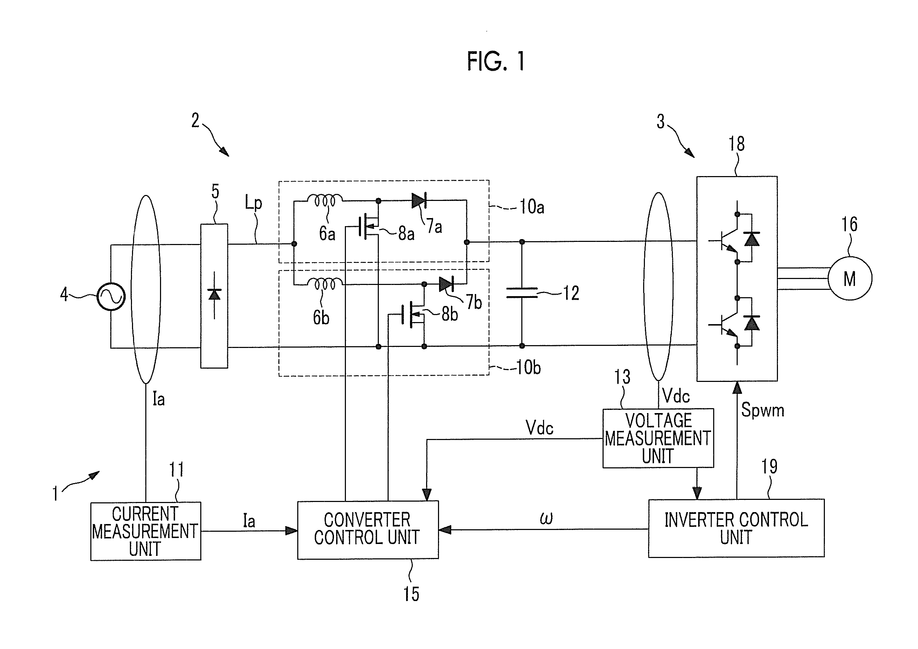

Fig. 1 is a view showing the schematic configuration of a motor drive device according to an embodiment of the invention. The motor drive device 1 is a motor drive device that drives a compressor motor of an air conditioner, particularly, an outdoor unit. As shown in Fig. 1, the motor drive device 1 includes a converter 2 and an inverter 3 as main components. The converter 2 converts AC power input from an AC power supply 4 into DC power and outputs the DC power, and the inverter 3 converts the DC power output from the converter 2 into three-phase AC power and outputs the three-phase AC power to a compressor motor 16.

The converter 2 includes a rectifier circuit 5, a smoothing capacitor (smoothing means) 12, two booster circuits 10a and 10b, and a converter control unit (converter control means) 15 as main components. The rectifier circuit 5 converts AC power input from the AC power supply 4 into DC power, the smoothing capacitor 12 is connected in parallel with the rectifier circuit 5 on the DC-output side of the rectifier circuit 5, the two booster circuits 10a and 10b are provided in parallel between the rectifier circuit 5 and the smoothing capacitor 12, and the converter control unit 15 controls the booster circuits 10a and 10b. Two booster circuits 10a and 10b are provided in Fig. 1, but only one booster circuit may be provided.

The booster circuit 10a includes an inductor (inductive element) 6a that is provided in series on a positive electrode bus Lp connecting the rectifier circuit 5 to the smoothing capacitor 12, a diode 7a that is connected in series to a current-output side of the inductor 6a, and a switching element 8a of which one end is connected between the inductor 6a and the diode 7a and which is connected in parallel with the rectifier circuit 5.

Likewise, the booster circuit 10b includes an inductor 6b that is provided in series on the positive electrode bus Lp connecting the rectifier circuit 5 to the smoothing capacitor 12, a diode 7b that is connected in series to a current-output side of the inductor 6b, and a switching element 8b of which one end is connected between the inductor 6b and the diode 7b and which is connected in parallel with the rectifier circuit 5.

Examples of the switching elements 8a and 8b include a FET (field effect transistor) and an IGBT (insulated gate bipolar transistor).

The inverter 3 includes a bridge circuit 18 that includes six switching elements and an inverter control unit 19 that controls the opening and closing of the switching elements of the bridge circuit 18. The inverter control unit 19 generates a gate drive signal Spwm for each switching element on the basis of a required rotational speed command input from, for example, a host device (not shown), and gives the gate drive signal to the bridge circuit 18. Examples of a specific method of inverter control include vector control, sensorless vector control, V/F control, overmodulation control, and one-pulse control.

The motor drive device 1 is provided with a current measurement unit 11 that measures a power supply input current Ia and a voltage measurement unit 13 that measures a DC voltage Vdc. A measurement signal, which is output from the current measurement unit 11, is output to the converter control unit 15. A measurement signal, which is output from the voltage measurement unit 13, is output to the converter control unit 15 and the inverter control unit 19.

Each of the converter control unit 15 and the inverter control unit 19 is, for example, an MPU (Micro Processing Unit), and includes a recording medium which can be read by a computer and in which a program for performing each processing to be described below is recorded. A CPU reads the program, which is recorded in the recording medium, in a main storage unit such as a RAM, and executes the program, so that each processing is performed. Examples of the recording medium, which can be read by a computer, include a magnetic disc, a magnetooptical disc, and a semiconductor memory.

The converter control unit 15 and the inverter control unit 19 may be embodied as one MPU, and may be embodied as individual MPUs. When the converter control unit 15 and the inverter control unit 19 are embodied as individual MPUs, the converter control unit 15 and the inverter control unit 19 are adapted so that data communication can be performed by both of the MPUs.

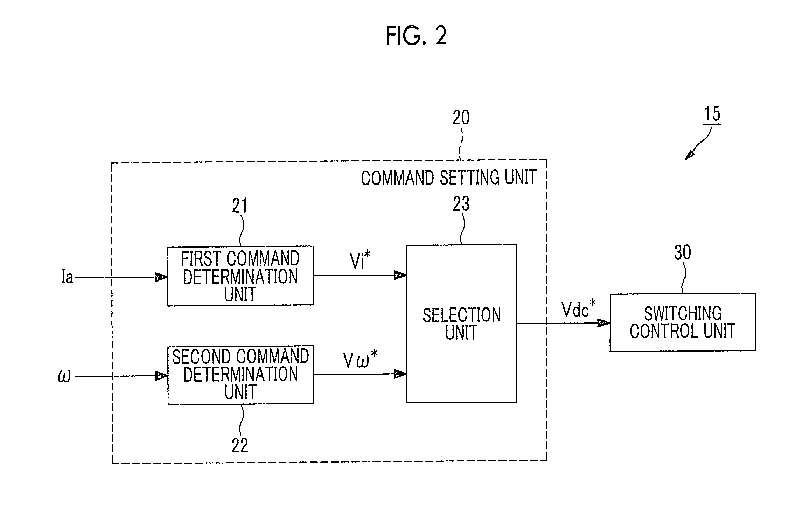

Fig. 2 is a functional block diagram of the converter control unit 15. As shown in Fig. 2, the converter control unit 15 includes a command setting unit 20 and a switching control unit 30. The command setting unit 20 sets a DC voltage command Vdc*. The switching control unit 30 controls the opening and closing of the switching elements 8a and 8b of the booster circuits 10a and 10b on the basis of the DC voltage command Vdc* that is set by the command setting unit 20.

More specifically, the command setting unit 20 includes a first command determination unit 21, a second command determination unit 22, and a selection unit 23.

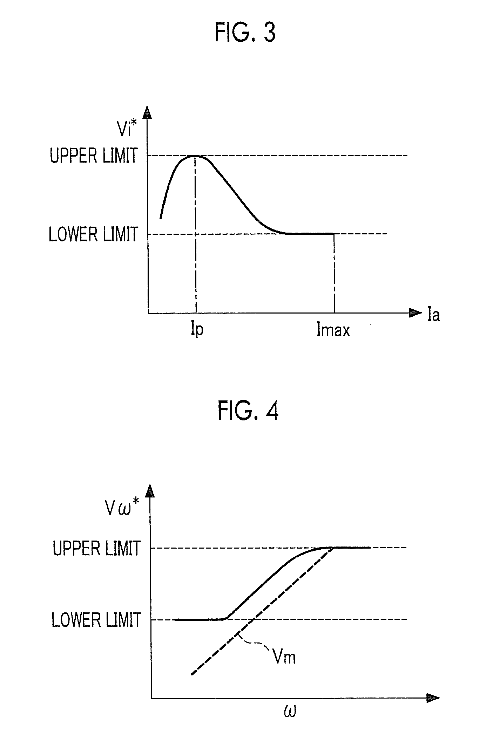

The first command determination unit 21 determines a first DC voltage command Vi*, which corresponds to the power supply input current Ia, by using first information in which the power supply input current Ia is associated with the first DC voltage command Vi* used to suppress harmonics included in the power supply input current Ia within a predetermined regulation value. Fig. 3 shows an example of the first information. In Fig. 3, the horizontal axis represents the power supply input current Ia and the vertical axis represents the first DC voltage command Vi*. As shown in Fig. 3, a property of the first DC voltage command Vi* relative to the power supply input current Ia takes a peak in an intermediate region that corresponds to a range of 20% to 50% of the maximum current value Imax of the power supply input current Ia, and the first DC voltage command Vi* has a property in which the first DC voltage command Vi* is gradually decreased with an increase or a decrease in the power supply input current Ia at a power supply input current Ip where the peak is taken.

For example, in an air conditioner of a 6 horsepower class, for example, the maximum current value is set to 25 A and the peak of the first DC voltage command Vi* is set in the range of 7 A to 10 A. For example, the first DC voltage command Vi* may be set so that a sine wave is formed.

The first information may be given in the form of a function that uses the power supply input current Ia as a parameter, and may be provided in the form of a table shown in Fig. 3.

The second command determination unit 22 determines a second DC voltage command Vω*, which corresponds to the rotational speed ω of the compressor motor 16, by using second information in which the rotational speed ω of the compressor motor 16 is associated with the second DC voltage command Vω*. Here, rotational speed ω, which is used to control the compressor motor 16 through the inverter 3, may be used as the rotational speed ω of the compressor motor 16. Specifically, rotational speed ω, which is supplied to the converter control unit 15 from the inverter control unit 19, is used as the rotational speed ω of the compressor motor 16.

Fig. 4 shows an example of the second information. In Fig. 4, a horizontal axis represents the rotational speed ω of the compressor motor 16 and a vertical axis represents the second DC voltage command Vω*. It is preferable that a property of the second DC voltage command Vω* relative to the rotational speed ω of the compressor motor 16 is set to a value larger than a counter electromotive voltage property Vm of the compressor motor 16 and is set to show the same inclination as a counter electromotive voltage Vm of the compressor motor 16 as shown in Fig. 4.

For example, when the DC voltage Vdc is set to be smaller than the value of a DC voltage Vdc that is required to achieve a required rotational speed of the compressor motor 16, field-weakening control is required in a high-speed rotation region. For this reason, a loss is increased. Conversely, when the DC voltage Vdc is set to a value larger than a value that is required by the compressor motor 16, switching is excessive. For this reason, a loss is increased. Accordingly, it is possible to suppress a switching loss to the lowest level by setting the minimum second DC voltage command, which is required to obtain a required rotational speed of the compressor motor 16, according to the rotational speed ω of the compressor motor 16.

The second information may be given in the form of a function that uses the rotational speed ω of the compressor motor 16 as a parameter, and may be provided in the form of a table shown in Fig. 4.

In the first information and the second information, the upper limits of the first DC voltage command Vi* and the second DC voltage command Vω* are set to be equal to or lower than the withstand voltage of the electronic component (for example, the smoothing capacitor 12) mounted on the motor drive device 1 and the lower limits thereof are set to be equal to or higher than the peak value of the power supply input current Ia supplied from the AC power supply 4.

The selection unit 23 selects a larger one of the first DC voltage command Vi* and the second DC voltage command Vω*, and gives the larger one to the switching control unit 30 as a current-voltage command Vdc*.

The switching control unit 30 controls the switching elements 8a and 8b of the booster circuits 10a and 10b by using the measurement signal output from the current measurement unit 11 (that is, a measured value of the power supply input current Ia) and the measurement signal output from the voltage measurement unit 13 (that is, a measured value of the DC voltage Vdc) so that the measured value of the DC voltage Vdc becomes the DC voltage command Vdc*. For example, the switching control unit 30 makes the measured value of the DC voltage Vdc correspond to the DC voltage command Vdc* by performing PAM control. Since a well-known method can be employed for the control of switching that is performed by the switching control unit 30, the detailed description thereof will be omitted here.

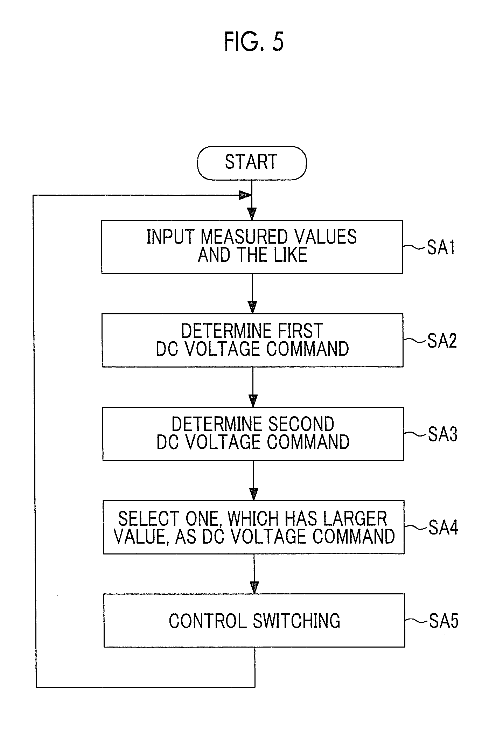

Next, the operation of the converter 2 having the above-mentioned configuration will be described with reference to Fig. 5.

First, the measured value of the power supply input current Ia is input to the converter control unit 15 from the current measurement unit 11, the rotational speed ω of the compressor motor 16 is input to the converter control unit 15 from the inverter control unit 19, and the measured value of the DC voltage Vdc is input to the converter control unit 15 from the voltage measurement unit 13 (Step SA1 of Fig. 5).

The first command determination unit 21 of the converter control unit 15 determines the first DC voltage command Vi*, which corresponds to the input power supply input current Ia, by using the first information (see Fig. 3) (Step SA2). Likewise, the second command determination unit 22 determines the second DC voltage command Vω*, which corresponds to the input rotational speed ω of the compressor motor 16, from the second information (see Fig. 4) (Step SA3). Subsequently, the selection unit 23 selects the one, which has a larger value, between the first DC voltage command Vi* and the second DC voltage command Vω* as the DC voltage command Vdc* (Step SA4).

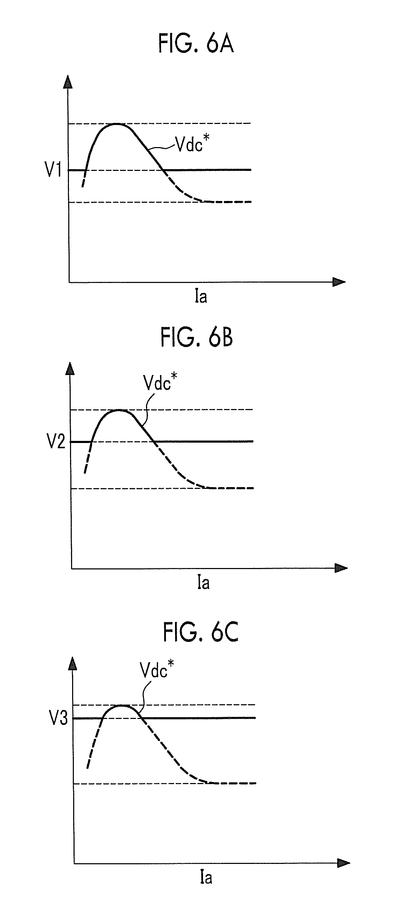

For example, when the rotational speed ω of the compressor motor 16 is in a low-rotational speed region, the second DC voltage command Vω* has a relatively small value (Vω*=V1) as shown in Fig. 6A. Accordingly, the first DC voltage command Vi* is selected in a wide range of the power supply input current Ia. When the rotational speed ω of the compressor motor 16 is in a middle-rotational speed range, the value of the second DC voltage command Vω* is larger than that in the low-rotational speed region (Vω*=V2>V1) as shown in Fig. 6B. Accordingly, a range in which the second DC voltage command Vω* is selected is widened. Further, in a high-rotational speed range where the value of the second DC voltage command Vω* is increased (Vω*=V3>V2), the second DC voltage command Vω* is selected in a wide range of the power supply input current Ia as shown in Fig. 6C.

The current-voltage command Vdc* selected by the selection unit 23 is given to the switching control unit 30, and the opening and closing of the switching elements 8a and 8b of the booster circuits 10a and 10b are controlled on the basis of the DC voltage command Vdc* (Step SA5).

As described above, according to the motor drive device of this embodiment, the air conditioner, and a method of controlling the converter, the harmonics included in the power supply input current become equal to or smaller than a predetermined regulation value and the value of the minimum DC voltage Vdc, which allows the rotational speed ω required in the compressor motor 16 to be achieved, can be set as the DC voltage command Vdc*. Accordingly, since the frequency of the opening and closing of the switching elements 8a and 8b of the booster circuits 10a and 10b can be suppressed to a minimum, a loss caused by switching can be reduced.

### Reference Signs List

- 1:: motor drive device
- 2:: converter
- 3:: inverter
- 4:: AC power supply
- 5:: rectifier circuit
- 8a, 8b:: switching element
- 10a, 10b:: booster circuit
- 11:: current measurement unit
- 12:: smoothing capacitor
- 13:: voltage measurement unit
- 15:: converter control unit
- 16:: compressor motor
- 19:: inverter control unit
- 20:: command setting unit
- 21:: first command determination unit
- 22:: second command determination unit
- 23:: selection unit
- 30:: switching control unit

## Claims

1. A motor drive device that drives a compressor motor mounted on an air conditioner, the motor drive device comprising:
a converter that converts AC power input from an AC power supply into DC power and outputs the DC power; and
an inverter that converts the DC power output from the converter into AC power and supplies the AC power to a compressor motor,
wherein the converter includes rectification means for converting the AC power input from an AC power supply into DC power, smoothing means that is connected in parallel with the rectification means on a DC-output side of the rectification means, at least one voltage-increasing means that is provided between the rectification means and the smoothing means and increases voltage by performing the opening and closing of switching elements, and converter control means,
the converter control means includes command setting means for setting a DC voltage command, and switching control means for controlling the opening and closing of the switching elements, which are included in the voltage-increasing means, on the basis of the DC voltage command set by the command setting means, and
the command setting means includes first command determination means for determining a first DC voltage command, which corresponds to a power supply input current, by using first information in which the power supply input current is associated with the first DC voltage command used to suppress harmonics included in the power supply input current within a predetermined regulation value, second command determination means for determining a second DC voltage command, which corresponds to a rotational speed of the compressor motor, by using second information in which the rotational speed of the compressor motor is associated with the second DC voltage command, and selection means for selecting a larger one of the first DC voltage command and the second DC voltage command and giving the selected one to the switching control means as the DC voltage command.

2. The motor drive device according to claim 1,
wherein a property of the first DC voltage command relative to the power supply input current takes a peak in an intermediate region of the power supply input current, and is a property in which the first DC voltage command is gradually decreased at the peak.

3. The motor drive device according to claim 1 or 2,
wherein a property of the second DC voltage command relative to the rotational speed of the compressor motor is set to a value larger than a counter electromotive voltage property of the compressor motor and is set to show the same inclination as a counter electromotive voltage of the compressor motor.

4. The motor drive device according to any one of claims 1 to 3,
wherein an upper limit of the current-voltage command is set to be equal to or lower than a withstand voltage of an electronic component mounted on the motor drive device and a lower limit of the current-voltage command is set to be equal to or higher than a peak value of the power supply input current supplied from the AC power supply.

5. An air conditioner comprising:
the motor drive device according to any one of claims 1 to 4.

6. A method of controlling a converter applied to a motor drive device, the motor drive device including a converter and an inverter, the converter including rectification means for converting AC power input from an AC power supply into DC power, smoothing means that is connected in parallel with the rectification means on a DC-output side of the rectification means, and at least one voltage-increasing means that is provided between the rectification means and the smoothing means, and the inverter converting the DC power output from the converter into AC power and supplying the AC power to a compressor motor, the method comprising:
a first command determination step of determining a first DC voltage command, which corresponds to a power supply input current, by using first information in which the power supply input current is associated with the first DC voltage command used to suppress harmonics included in the power supply input current within a predetermined regulation value,
a second command determination step of determining a second DC voltage command, which corresponds to a rotational speed of the compressor motor, by using second information in which the rotational speed of the compressor motor is associated with the second DC voltage command,
a selection step of selecting a larger one of the first DC voltage command and the second DC voltage command as a DC voltage command, and
a switching control step of controlling the opening and closing of switching elements, which are included in the voltage-increasing means, on the basis of the selected DC voltage command.
